Europäisches Patentamt

European Patent Office

Office européen des brevets

(19)

(11) Numéro de publication: **0 235 061**
**B1**

(12) **FASCICULE DE BREVET EUROPEEN**

(45) Date de publication du fascicule du brevet: **02.05.90**

(51) Int. Cl.⁵: **A 21 B 1/36**

(21) Numéro de dépôt: **87440006.2**

(22) Date de dépôt: **30.01.87**

(54) **Four de boulangerie à chauffage indirect et à chariot et son procédé de vidage de vapeur.**

(30) Priorité: **05.02.86 FR 8601667**

(43) Date de publication de la demande:
**02.09.87 Bulletin 87/36**

(45) Mention de la délivrance du brevet:
**02.05.90 Bulletin 90/18**

(84) Etats contractants désignés:
**AT BE CH DE ES GB GR IT LI LU NL SE**

(56) Documents cités:
**EP-A-0 002 784**
**AU-A- 18 531**
**DE-A-3 508 747**
**FR-A-1 283 085**
**FR-A-2 400 843**
**FR-A-2 484 200**

(73) Titulaire: **Voegtlin, René**
**2, rue de la Colline Oberhausbergen**
**F-67200 Strasbourg (FR)**

(72) Inventeur: **Voegtlin, René**
**2, rue de la Colline Oberhausbergen**
**F-67200 Strasbourg (FR)**

(74) Mandataire: **Aubertin, François**
**Cabinet Lepage & Aubertin Innovations et**
**Prestations 4, rue de Haguenau**
**F-67000 Strasbourg (FR)**

Courier Press, Leamington Spa, England.

## Description

L'invention concerne, d'une part, un four de boulangerie à chauffage indirect et à chariot comprenant une chambre de cuisson obturée par une porte d'enfournement s'ouvrant sur l'intégralité de cette dernière, un canal de recyclage pourvu d'un ventilateur à turbine et de moyens de chauffage de l'air refroidi en provenance de la chambre de cuisson, un collecteur présentant des ouvertures pour l'introduction de filets d'air chaud dans la chambre de cuisson et un appareil de production de vapeur et, d'autre part, un procédé de vidage de la vapeur.

Pour la cuisson des produits de boulangerie, de viennoiserie, de pâtisserie et similaires, on connaît, selon l'état actuel de la technique, des fours de boulangerie à chariot comportant une porte d'enfournement s'ouvrant sur l'intégralité de la chambre de cuisson. Au travers de cette porte est engagé ou dégagé de ladite chambre de cuisson le chariot ouvert constitué par un échelle roulante garnie de plaques disposées les unes au-dessus des autres, ces plaques supportant les produits à cuire.

Ledit chariot, soit reste en position fixe pendant le durée de cuisson, soit est soumis à une rotation lente autour de son axe vertical pendant la durée de cuisson. Dans les deux cas, des filets d'air chaud, en provenance d'un collecteur comportant des ouvertures, sont soufflés entre les plaques supportant les produits à cuire, le mouvement tournant permettant de parfaire le régularité de cuisson des produits en tous points des plaques généralement rectangulaires.

En plus de l'apport de chaleur nécessaire à la cuisson, le four de boulangerie doit comporter un ensemble de dispositifs pour la production et l'évacuation de la vapeur. En effet, pour cuire du pain, il faut immédiatement, après l'enfournement, remplir de vapeur la chambre de cuisson. La vapeur, se condensant sur les pièces de pâte encore froides, retarde ainsi la déshydration de la peau des produits à cuire sous l'action de la chaleur pendant la phase initiale de la cuisson. Cette phase initiale de la cuisson est constituée par le développement en volume des produits à cuire sous la poussée intérieure des ferments. Le retardement de la formation de la croûte extérieure qui conserre aux produits à cuire une peau élastique pendant plusieurs minutes assure auxdits produits à cuire un développement en volume optimum et annihile tout risque de formation de craquelures non désirées.

La production de vapeur est généralement obtenue soit en laissant couler de l'eau sur des surfaces métalliques placées à l'intérieur du four de boulangerie et préalablement chauffées par le circuit d'air chaud, soit en pulvérisant de l'eau directement dans le circuit de recyclage d'air chaud par l'intermédiaire de buses d'injection.

Pour que la chambre de cuisson puisse se remplir facilement de vapeur sans création de surpression inopportune, celle-ci généralement pourvue d'un tube plongeur dont l'extrémité inférieure, proche du plancher, est ouverte. Ce tube plongeur est relié à une conduite d'évacuation de vapeur appelée communément évacuation de buée. A l'arrivée de vapeur l'air contenu initialement dans la chambre de cuisson peut être chassé à travers l'ouverture inférieure du tube plongeur. Ce dernier permet également l'évacuation du surplus de vapeur éventuellement produit tout en maintenant dans la chambre de cuisson une cloche pleine de vapeur.

Quelques minutes après la phase initiale de développement du volume des produits et de montée en témperature, lesdits produits cuisent en perdant quinze à trente pour cent de leur de pâte initial en fonction de la nature des produits et selon le résultat final désiré. Cette perte de poids se traduit sous forme d'un dégagement de vapeur se répandant dans la chambre de cuisson mais qu'il faut inéluctablement évacuer.

Si les produits concernés doivent cuire en ambiance humide, l'ouverture inférierue du tube plongeur peut suffire à l'évacuation de cette vapeur dégagée par les produits. Si, par contre, les produits concernées doivent cuire en atmosphère moins saturée, ou pourvoit les fours de boulangerie d'un oura d'évacuation de buée relié à la conduite d'évacuation de vapeur et constitué d'un orifice pratiquè dans le plafond de la chambre de cuisson et d'un soupape que l'on peut ouvrir pendant la phase finale de la cuisson.

Lorsque les produits sont cults, cette fin de cuisson étant annoncée généralement par le singla sonore de fin de cycle d'un minuterie, il faut ouvrir la porte d'enfournement, obturant li'ntégralité de la chambre de cuisson, et retirer le chariot.

A ce moment, la chambre de cuisson est entièrement remplie de vapeur, même si, au préalable, l'oura d évacuation de vapeur, relié à une bonne conduite d'évacuation de vapeur, a été entièrement ouvert. En effet, du fait qu'aucune arrivée d'air ńest prévue pour remplacer la vapeur, l'oura ne peut évacuer que le surplus de vapeur dégagé par les produits en phase de perte de poids mais pas le volume de vapeur normal de la chambre de cuisson.

De surcroît, le dégagement de vapeur des produits est maximal au stade de la fin la cuisson, même en ayant arrêté le chauffage. En effet, cette coupure de chauffage est sans influence, du fait qu'au stade de la fin de cuisson, les produits ont accumulé un maximum de chaleur.

Pour les différentes raisons invoquées ci-dessus, il déferle instantanément un volume de vapeur de plusieurs mètres cube à l'extérieur du four de boulangerie lors de l'ouverture de la porte d'enfournement en vue de retirer le chariot.

Ce déferlement brutal de la vapeur peut être très dangereux pour l'opérateur qui risque de brûlures importantes. Par ailleurs, ces déférlements de vapeur à l'extérieur du four de boulangerie, lors des défournements successifs, sont également très insalubres pour les murs et le plafond du fournil.

Ainsi, on connaît, par le document FR—A—2 484 200, un four de boulangerie pour la cuisson de pâte, notamment à pain, du type comprenant au moins une enceinte délimitant une chambre de cuisson à recevoir un chariot rotatif introduit ou retiré par une porte à fermeture étanche. Ladite chambre est en relation avec un circuit de circulation d'air chaud comprenant un ventilateur et un appareil de montée en température à chauffage direct. La chambre de cuisson communique avec une cheminée d'évacuation dont la section ouverte d'entreé s'ouvrée s'ouvre à la base de la chambre de cuisson. Toutefois, cette cheminée d'évacuation sert essentiellement d'évacuation de la fumée du fait qu'il s'agit d'un four de boulangerie à chauffage direct qui, le cas échéant, entraîne également la vapeur mais ne peut servir d'évacuation de la vapeur après la cuisson du fait que, d'une part, il n'y a aucun apport d'air extérieur pouvant créer un courant dans la chambre de cuisson et que, d'autre part, les moyens de chauffage direct, dont fait partie le ventilateur, sont à l'arrêt. De ce fait, en ouvrant la porte d'enfournement, la vapeur déferie instantanément vers l'extérieur. Le four du document DE—A—3 508 747 n'a, aussi, aucun système d'evacuation de la vapeur.

Les conséquences de ces nuisances sont encore amplifiées lorsque ledit four est placé dans une boulangerie de vitrine où l'on cuit en public.

Traditionnellement, on essaie de remédier à ces inconvénients en surplombant la porte de d'enfournement du four de boulangerie par une hotte reliée à un conduit ventilé d'évacuation de vapeur. Cependant, ces hottes sont pratiquement toujours inefficaces. En effet, d'une part, leur captage est médiocre du fiat que leur bord inférieur se situe fatalement au-dessus de la hauteur de tête de l'homme devant accéder à la porte d'enfournement du four de boulangerie qui s'ouvre depuis le niveau du sol et, d'autre part, il est pratiquement impossible de conférer à la hotte la capacité nécessaire en volume pour absorber la venue instantanée d'une telle quantité de vapeur.

Dans ces conditions, on donne le conseil à l'opérateur de commencer par entrouvrir faiblement la porte d'enfournement, de laisser échapper un certain laps de temps la vapeur très progressivement, puis d'ouvrir totalement, par la suite, la porte d'enfournement. Cependant, il ne s'agit que d'un procédé empirique et il se produit souvent de graves incidents dûs à la défaillance humaine.

La présente invention a pour but de remédier à ces inconvénients. L'invention, telle qu'elle est caractérisée dans les revendications, résout le problème consistant à créer un procédé de vidage de la vapeur selon lequel on remplace, après la cuisson, à plusieurs reprises, le volume de la chambre de cuisson du four de boulangerie par de l'air ambiant pris à l'extérieur du four entre le moment de la fin du temps de cuisson, où ce volume est rempli de vapeur, et le déclenchement d'un signal annonçant la fin du vidage de la vapeur et la possibilité d'ouvrir sans danger la porte d'enfournement, ce procédé étant appliqué à un four de boulangerie à chauffage indirect et à chariot comprenant une chambre de cuisson obturée par un porte d'enfournement s'ouvrant sur l'intégralité de cette dernière, un canal de recyclage pourvu d'un ventilateur à turbine et des moyens de chauffage de l'air refroidi en provenance de la chambre de cuisson, un collecteur présentant des ouvertures pour l'introduction de filets d'air chaud dans la chambre de cuisson et un appareil de production de vapeur et comportant un dispositif pour le vidage rapide de la vapeur renfermée dans la chambre de cuisson, en fin du cycle de cuisson et avant l'ouverture de la porte d'enfournement, par la création d'un courant d'évacuation provoqué, d'une part, par un flux, d'air extérieur s'engoufrant au travers des moyens libérés de prise d'air extérieur dans le bas de la chambre de cuisson pour remplacer la vapeur contenue dans cette dernière, et, d'autre part, par une extraction au travers d'une ouïe, pratiquée dans le haut de la chambre de cuisson, effectuée par le ventilateur à turbine, par aspiration puis refoulement de la vapeur aspirée à travers des moyens d'évacuation, les moyens de prise d'air extérieur et les moyens d'évacuation, coopérant les uns avec les autres, étant commandés simultanément par des éléments moteurs.

Les avantages obtenus grâce à cette invention consistent essentiellement en ce que les vapeurs brûlantes sont dégagées avant l'ouverture de la porte d'enfournement, ce qui permet la suppression de tout risque de brûlure du aux vapeurs et à l'élimination de déferlement de la vapeur dans le fournil.

L'invention est exposées ci-après plus en détail à l'aide de dessins représentenant seulement un mode d'exécution.

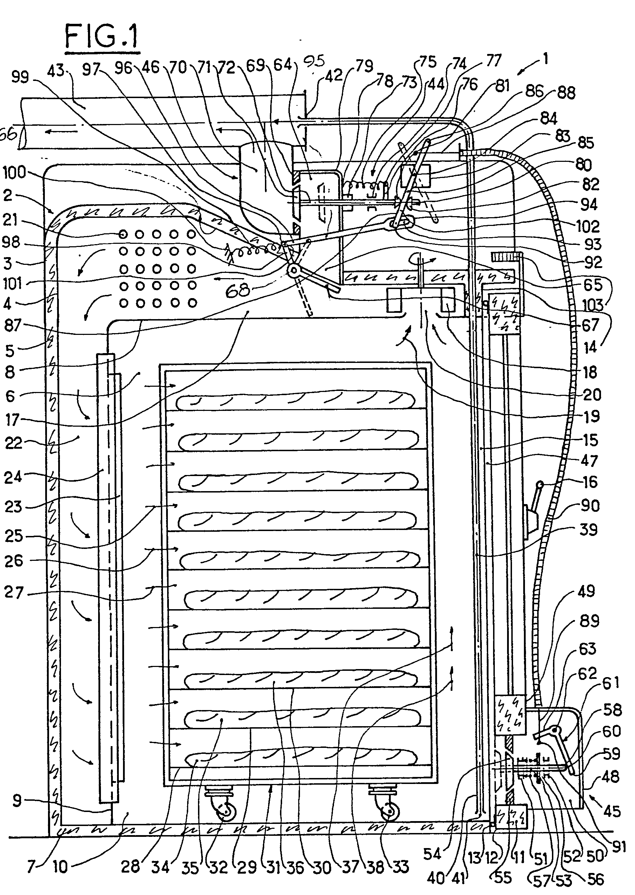

La figure 1 représente, en vue en élévation et en coupe, un four de boulangerie comportant un dispositif de vidage de la vapeur conforme à l'invention.

On se réfère à la figure unique.

Le four de boulangerie 1 est entouré d'une enveloppe 2 constituée d'un paroi externe 3 et d'une paroi interne 4 entre lesquelles se trouve un matériau isolant 5. Ledit four de boulangerie 1 comporte une chambre de cuisson 6 délimitée en bas par un plancher 7, en haut par un plafond 8, par un paroi arrière 9, par des parois latérales 10 et à l'avant par une porte d'enfournement 11. Celle-ci comporte, sur sa face interne 12, un joint périphérique 13 venant s'appliquer contre le cadere dormant 14 de l'ouverture avant 15 de la chambre de cuisson 6. La porte d'enfournement 11, de largeur indentique à la largeur de l'ouverture avant 15, comporte une poignée de manoeuvre 16 permettant d'actionner un mécanisme de verrouillage quelconque non représenté dans la figure.

Au-dessus de plafond 8, se trouve un canal de recyclage 17 pourvu d'un ventilateur 18 dont seule la turbine est réprésentée. Cette turbine aspire l'air refroide 19 à travers une ouïe d'aspiration 20 pratiquée dans la plafond 8. Le ventilateur 18 refoule l'air refroidi aspiré en direction de moyens de chauffage 21.

Ces moyens de chauffage 21 sont constitués, selon un premier mode de réalisation, d'un batterie de résistance électriques chauffantes ou, selon un second mode de réalisation, d'un échangeur chauffé par un brûleur à combustible gazeux ou liquide.

Après avoir traversé les moyens de chauffage 21, l'air chaud est dirigé vers un collecteur 22 situé derrière le paroi arrière 9 et relié à la chambre de cuisson 6 par deux fentes verticales de soufflage 23 disposées de part et d'autre d'un appareil de production de vapeur 24.

Les filets d'air chaud 25, 26, 37, soufflés par les fentes verticales 23 et apportant la chaleur nécessaire à la cuisson, sont dirigés entre les plaques 28, 29, 30 d'un chariot 31 constitué par une échelle roulante pourvue de roues 32, 33. Les plaques 28, 39, 30 enfilées dans le chariot 31 sont chargées de produits à cuire 34, 35, 36. A titre d'exemple non limitatif, les produits à cuire représentés sont des pains longs mais, bien entendu, il peut s'agir de tout produit de boulangerie, de viennoiserie, de pâtisserie et similaires.

Selon un premier mode de réalisation, le chariot 31 est en position fixe pendant toute la durée de cuisson.

Selon un autre mode de réalisation, le chariot 31 est soumis à un mouvement de rotation lente autour de son axe vertical. Ce mouvement de rotation, coopérant à la régularité de cuisson des produits en tous points des plaques de surface rectangulaire, est réalisé soit par l'intermédiaire d'un plaque tournante dont est pourvue le plancher 7, soit par l'intermédiaire d'un crochet entraîné en rotation par un élément moteur et disposé au plafond 8, le chariot 31 y étant accroché lorsqu'il est poussé dans la chambre de cuisson 6.

Après avoir traversé le chariot 31 entre les plaques 28, 29, 30 et en léchant les produits à cuire 34, 35, 36, les filets d'air 37, 38 appauvris en chaleur sont aspirés par la turbine du ventilateur 18 à travers l'ouïe d'aspiration 20 et la cycle recommence.

Après avoir chauffé le four de boulangerie 1 pour que celui-ci atteigne la température de cuisson, on introduit le chariot 31 dans la chambre de cuisson 6. On procède à la fermeture et au verrouillage de la porte d'enfournement 11 et on démarre le cycle de cuisson. Celui-ci commence par un remplissage de vapeur de la chambre de cuisson 6 au moyen de l'appareil de production de vapeur 24 en faisant couler de l'eau sur ses surfaces préalablement chauffées par le recyclage d'air chaud.

Cette vapeur se condense principalement sur la peau des produits à cuire 34, 35, 36 retardant la formation de la croûte et maintenant cette peau à l'état élastique pendant plusieurs minutes afin de permettre auxdits produits à cuire de se développer en volume optimum sans formation de craquelures non désirées, ni de déchirures sur leur croûte finale.

La chambre de cuisson 6 comporte un tube plongeur 39 dont l'extrémité inférieure 40, proche du plancher 7, présente une ouverture 41 et dont l'extrémité supérieure 42 débouche dans une conduite d'évacuation de vapeur 43. A l'arrivée de la vapeur, l'air contenu initialement dans la chambre de cuisson 6 est chassé à travers l'ouverture 41 du tube plongeur 39. De même, peut être évacué par ladite ouverture 41 le surplus de vapeur éventuellement produit tout en maintenant la cloche pleine de vapeur constitueze par la chambre de cuisson 6 pendant la prise de buée des pâtons des pains longs représentés dans la figure 1.

Sous l'action du chauffage et après la phase du développement en volume optimum, commence la phase de cuisson des pains longs 34, 35, 36. Ces pains longs perdent une partie de leur poids de pâte sous forme de dégagement de vapeur.

En considérant que les produits à cuire sont des pains longs, les pièces de pâte perdent la cuisson de l'ordre du quart de leur poids initial. La chambre de cuisson 6 se trouve sensiblement à la pression atmosphérique, à de faibles variations près dues au ventilateur de recyclage, et les produits à cuire dégagent leur vapeur sensiblement à cent degrés Celsius. Les pains longs, pris à titre d'exemple en tant que produits à cuire, supportent la cuisson en atmosphère légèrement humide et l'évacuation de la vapeur par l'ouverture 41 du tube plongeur 39 est suffisante pendant la cuisson.

Par contre, le vapeur arrivant à la conduite d'évacuation de vapeur 43 se trouve à l'état de vapeur surchauffée, étant donné que, pour cuire les pains longs, la température de cuisson du four de boulangerie se situe entre deux cent cinquanter à trois cents degrés Celsius.

Lorsque la minuterie, préréglée en fonction du temps de cuisson désiré, arrive à sa fin de cycle, les produits sont cuits. Les moyens de chauffage 21 sont mis à l'arrêt et, le cas échéant, la rotation du chariot 31 s'arrête de sorte que ledit chariot 31 se trouve en position de défournement. La chambre de cuisson 6 se trouve à présent complètement remplie de vapeur ce remplissage étant fortement alimenté par le ressuage des produits dont le dégagement de vapeur se trouve à son maximum.

Entre le moment de la fin de la cuisson et le moment de l'ouverture de la porte d'enfournement 11 du four de boulangerie 1 en vue de retirer le chariot 31, il y a la mise en oeuvre du procédé, objet de la présente invention. Selon ce procédé, on renouvelle à plusieurs reprises le volume de la chambre de cuisson 6 par de l'air ambiant, pris à l'extérieur du four de boulangerie 1 et ce, en un minimum de temps.

A cet effet, on utilise un dispositif 44 de vidage rapide de la vapeur renfermée dans la chambre de cuisson 6. Ce dispositif 44 comporte des moyens de prise d'air 45 et des moyens d'évacuation de la vapeur 46.

Les moyens de prise d'air 45 sont avantageusement situés dans le bas de la chambre de cuisson 6 et, plus particulièrement dans le bas de la porte d'enfournement 11, le haut étant généralement

réservé à une partie vitrée 47 pour l'observation de la cuisson. Bien entendu, ces moyens de prise d'air 45 pourraient également être placés dans le bas de la paroi arrière 9 ou dans le bas de l'une ou l'autre des parois latérales 10 du four de boulangerie 1.

Ces moyens de prise d'air 45 comportent un carter 48 solidaire de la face avant 49 de la porte d'enfournement 11. Ce carter 48 présente à sa partie inférieure une ouverture 50 à travers laquelle peut pénétrer l'air ambiant. Ce carter 48 renferme deux douilles de guidage 51, 52 à travers desquelles coulisse la tige 53 d'une soupape d'admission 54. Celle-ci coopère avec un siège de soupape 55 réalisé dans la porte d'enfournement 11. La tige de soupape 53 comporte un épaulement 56. On intercale entre l'épaulement 56 et la douille de guidage 51 un élément élastique 57 maintenant la soupape d'admission 54 en position fermée pendant la cuisson, la coopération entre la soupape d'admission 54 et le siège de soupape 55 assurant l'étanchéité.

Contre l'extrémité libre 58 de la tige 53 de la soupape d'admission 54 bute l'extrémité 59 de l'une des ailes 60 d'un levier coudé 61 articulé autour d'un axe 62 et dont l'autre aile 63 est reliée à l'une des extrémités d'un des éléments moteurs décrits ci-après.

Les moyens d'évacuation de vapeur 46 comportent une chambre d'évacuation 64 reliée à la chambre de cuisson 6 par une ouverture 65 réalisée dans le dessus 66 du canal de recyclage 17. Cette ouverture 65 peut être obstruée par un volet d'orientation 67 pouvant pivoter autour d'un axe 68. Ledit volet d'orientation 67 est appliqué pendant la cuisson contre le dessus du canal de recyclage 17 et, de ce fait, la turbine du ventilateur 18 refoule son débit pour la cuisson vers les moyens de chauffage 21 alors qu'il est abaissé lors du vidage de la vapeur. Dans cette position, le volet d'orientation 67 obstrue le canal de recyclage 17 et la turbine du ventilateur 18 refoule son débit vers la chambre d'évacuation 64. Ce ventilateur à turbine 18 permet de réaliser une ventilation haute dans la chambre de cuisson 6. Cependant, ledit volet d'orientation 67 n'obstrue pas d'une manière étanche l'ouverture 65.

La chambre d'évacuation 64 est également reliée à travers un siège de soupape 69 à un canal d'évacuation 70 débouchant dans la conduite d'évacuation de vapeur 43.

Pendant la cuisson, la fermeture totalement étanche de l'évacuation de la vapeur est assurée par une soupape d'évacuation 71 coopérant avec le siège de soupape 69. Ladite soupape d'évacuation 71 comprend une tige de soupape 72 coulissant à travers un presse-étoupe 73 et une douille de guidage 74. La soupape d'évacuation 71 prend appui contre le siège de soupape 69 sous l'action d'un élément élastique de rappel 75 dont une des extrémité 76 est fixée à un ergot 77 solidaire de la tige de soupape 72 et l'autre extrémité 78 est fixée à la paroi 79 de la chambre d'évacuation 64. La tige de soupape 72 comporte à son extrémité libre 80 deux épaulement 81, 82 entre lesquels est interposé une des éléments moteurs.

Les éléments moteurs comportent un servo-moteur 83. Sur l'arbre 84 de ce servo-moteur 83 est fixé, solidaire en rotation, un levir de commande principal 85 dont les deux extrémités 86, 87 décrivent un arc cercle par rapport à l'arbe 84 du servo-moteur 83. Sur l'extrémité 86 du levier de commande principal 85 est fixée une des extrémités 88 d'un câble 89 conduit par une gaine flexible 90 et dont l'autre extrémité 91 est reliée à l'aile 63 du levir coudé 61 des moyens de prise d'air 45.

L'autre extrémité 87 du levier de commande principal 85 comporte un axe de liaison 92 engagé dans un trou oblong 93 réalisé dans une des extrémités 94 d'un bielle 95 dont l'autre extrémité 96 est reliée par un axe 97 à un levir 98 solidaire du volet d'orientation 67. Le trou oblong 93 permet une course à vide à l'extrémité 87 du levier de commande principal 85. La mise en position de fermeture du volet d'orientation 67 obturant l'ouverture 65 est réalisée par un ressort de rappel 99 dont une des extrémités 100 est fixe alors que l'autre extrémité 101 est solidaire du levier 98 du volet d'orientation 67.

La tige de soupape 72 est située entre l'extrémité 87 du levier de commande principal 835 et l'arbre 84 du servo-moteur 83, de sorte que l'aile 102 dudit levier de commande principal 85 est intercalée entre les épaulements 81, 82 de la tige de soupape 72.

A la fin de la cuisson, le servo-moteur 83 commandé automatiquement à la fin du cycle de la minuterie du temps de cuisson provoque, par l'intermédiaire de son arbre 84, la rotation du levier de commande principal 85. L'extrémité 86 exerce une traction sur le câble 89 qui transmet cette traction sur l'aile 63 du levier coudé 61. Celui-ci pivote autour de l'axe 62. De ce fait, l'aile 60 pousse sur la tige de soupape 53 de sorte que la soupape d'admission 54 libère le siège de soupape 55 à travers lequel peut s'engouffrer l'air extérieur, cette position de la soupape d'admission 54 est représentée en pointillés dans la figure.

Au cours de la rotation du levier de commande principal 85, l'extrémité 87 fait une course à vide le trou oblong 93 de la bielle 95 sans agir sur cette dernière. Par contre, l'aile 102 dudit levier de commande principal 85 exerce une traction sur l'épaulement 82, et par voie de conséquence, sur la tige de soupape 72 conférant à la soupape d'évacuation 71 la position indiquée en pointillés dans la figure. De ce fait, on libère le siège de soupape 69 et la vapeur renfermée dans la chambre d'évacuation 64 peut se dégager. Ainsi, les deux soupapes 54 et 71 sont ouvertes avant l'ouvertures du volet d'orientation.

Lorsque l'axe de liaison 92 et l'extrémité 87 du levier de commande 85 prend appui contre le chant du trou oblong, le levier de commande 85 exerce une traction sur la bielle 95 et, par voie de conséquence, une traction sur le levier 98 conférant au volet d'orientation 67 la position représentée en pointillés dans la figure. De ce fait, la vapeur, renfermée dans la chambre de cuisson 6 est évacuée par l'intermédiaire de la turbine 18 et est remplacée par l'air exté rieur s'engouffrant à travers le siège de soupape 55. Cette vapeur refoulée passe à travers l'ouverture libérée 65, la chambre d'évacuation 64, le siège de soupape libéré 69, le canal d'évacuation 70 et la conduite d'évacuation 43.

Le débit d'air extérieur emporte également le ressuage de buée des produits dégageant un débit maximum de vapeur à ce stade.

Après une durée de vidage correspondant à plusieurs remplacements du volume intérieur de la chambre de cuisson 6 par de l'air extérieur, il ne reste plus de vapeur à l'intérieur du four de boulangerie 1. Cette durée de vidage, gérée par un quelconque temporisateur prérégié (non représenté dans la figure), est très courte en raison du débit relativement important du ventilateur de recyclage à turbine 18. La fin de la temporisation, correspondant à la fin de l'opération de vidage de vapeur, est annoncée à l'opérateur par un signal sonore ou optique ou par les deux à la fois.

Pour éviter toute fausse manoeuvre, on peut prévoir que ledit temporisateur commande également le mécanisme de verrouillage de la porte d'enfournement 11.

Ainsi, l'opérateur peut ouvrir cette dernière sans risque de dégagement de vapeur vers l'extérieur du four et il peut procéder au retrait du chariot 31.

A la refermeture de la porte d'enfournement 11, un détecteur de fin de course 103 agira sur les éléments moteurs. L'élément élastique 57 agira sur la soupape d'admission 54 pour fermer la prise d'air, l'élément élastique 75 agira sur la soupape d'évacuation 71 pour fermer l'évacuation de la vapeur et le ressort de rappel 99 agira sur le volet d'orientation 67 obturant l'ouverture 65 et libérant le canal de recyclage 17.

Selon un autre mode de réalisation, le levier de commande principal 85 est actionnée manuellement mais il est préférable d'agir automatiquement sur celui-ci par l'intermédiaire du servomoteur 83. Dans le cas d'une manoeuvre manuelle, le levier de commande principal 85 pivote autour d'un axe d'articulation 84.

Lorsqu'il s'agit de cuire un produit de viennoiserie, par exemple des croissants, le processus de cuisson est légèrement différent de celui décrit ci-dessus et concernant les pains longs. Pour les croissants, on ne procède pas au départ de la cuisson au remplissage en vapeur de la chambre de cuisson 6. Pendant leur cuisson, les croissants ne doivent pas cuire en atmosphère trop humide. Les fours connus sont équipés traditionnellement à cet effet d'un oura d'évacuation de buée prise au plafond de la chambre de cuisson 6 et raccordé à la conduite d'évacuation de vapeur 43 dans le but d'évacuer la vapeur dégagée par les produits pendant leur cuisson. Dans le four pourvu conformément à l'invention du dispositif de vidage 44 décrit ci-dessus, il n'est pas nécessaire d'adjoindre au four un tel oura, le dispositif de vidage rapide 44 pouvant parfaitement remplir ce rôle pendant la durée de la cuisson. A cet effet, on confère au levier de commande principal 85 une position intermédiaire par rapport aux deux positions extrêmes représenteés dans la figure.

Dans une telle position intermédiaire, la soupape d'évacuation 71 est ouverte partiellement alors qu'aucune action n'est réalisée, ni sur le volet d'orientation 67 du fait de la course à vide de l'axe de liaison 92 dans le trou oblong 93 de la bielle 95, ni sur la soupape d'admission 54 en conférant sur surlongueur à l'extrémité 88 du câble 89.

Comme précisé ci-dessus, le volet d'orientation 67 ne constitue par une obturation étanche dans ses deux positions de fonctionnement. Ainsi, la soupape d'évacuation 71 peut fonctionner comme aura d'évacuation de buée lorsque le volet d'orientation 67 est en position haute de recyclage alors qu'en position basse du volet d'orientation 67, il se réalise un léger débit de fuite de recyclage, ce qui représente un avantage pour les résistances électriques de chauffage. En effet, il n'est pas souhaitable que la ventilation s'arrête immédiatement et totalement lorsque l'on coupe l'alimentation électrique desdites résistances.

Selon un autre de réalisation, le système de câble 89 et de gaine flexible 90 reliant le levier de commande principal 85 à la soupape d'admission 54 peut être remplacé par une liaison électrique en équipant ladite soupape d'admission 54 d'un servo-moteur individuel.

Selon un autre mode de réalisation, ce câble 89 et sa gaine flexible 90 peuvent être remplacés par un ensemble de tringles articulées entre-elles.

Selon un autre mode de réalisation, ledit câble 89 peut être remplacé par une gaine flexible hydraulique munie à son extrémité liée au levier de commande principal 85 par un vérin moteur et reliée à la soupape d'admission 54 par un vérin récepteur.

Selon un autre mode de réalisation, on utilise un ventilateur auxiliaire monté sur une prise de ventilation réalisée dans le plafond de la chambre de cuisson 6 munie d'un soupape d'évacuation pour procéder au vidage de la vapeur du four par renouvellement de son atmosphère par de l'air ambiant moyennant des moyens de prise d'air 45 munis d'un soupape d'admission 54. Dans ces conditions, le ventilateur de recyclage du chauffage ne coopère plus au vidage de vapeur et le volet d'orientation 67 peut être supprimé.

**Revendications**

1. Four de boulangerie à chauffage indirect et à chariot (31) comprenant une chambre de cuission (6) obturée par une porte d'enfournement (11) s'ouvrant sur l'intégralité de cette dernière, un canal de recyclage (17) pourvu d'un ventilateur à turbine (18) et des moyens de chauffage (21) de l'air refroidi en provenance de la chambre de

cuisson (6), un collecteur (22) présentant des ouvertures (23) pour l'introduction de filets d'air chaud (25, 26 27) dans la chambre de cuisson (6) et un appareil de production de vapeur (24), caractérisé en ce qu'il comporte un dispositif (44) pour le vidage rapide de la vapeur renfermée dans la chambre de cuisson (6), en fin du cycle de cuisson et avant l'ouverture de la porte d'enfournement (11), par la création d'un courant d'évacuation provoqué, d'une part, par un flux d'air extérieur s'engouffrant au travers des moyens libérés (45) de prise d'air extérieur dans la bas de la chambre de cuisson (6) pour remplacer la vapeur contenue dans cette dernière, et, d'autre part, par un extraction au travers d'une ouïe (20), pratiquée dans le haut de la chambre de cuisson (6), effectuée par le ventilateur à turbine (18), par aspiration puis refoulement de la vapeur aspirée à travers des moyens d'évacuation (46), les moyens de prise d'air extérieur (45) et les moyens d'évacuation (46), coopérant les uns avec les autres, étant commandés simultanément par des éléments moteurs (61, 83, 85, 89, 95).

2. Four de boulangerie selon la revendication 1, caractérisé en ce que les moyens de prise d'air (45) comportent une soupape d'admission (54) coopérant avec un siège de soupape (55) réalisé, de préférence, dans le bas de la porte d'enfournement (11) et dont la tige de soupape (53) coulissant à travers des douilles de guidage (51, 52) coopère avec un des moyens moteurs (61), le tout étant logé dans un carter (48) solidaire de la face avant (49) de la porte d'enfournement (11).

3. Four de boulangerie selon la revendication 2, caractérisé en ce que la tige de soupape (53) comporte un épaulement (56) servant d'arrêt à un élément élastique de rappel (57) intercalé entre ledit épaulement (56) et l'une des douilles de guidage (51).

4. Four de boulangerie selon la revendication 1, caractérisé en ce que les moyens d'évacuation de la vapeur (46) comportent une chambre d'évacuation (64) reliée, d'une part, à la chambre de cuisson (6) à travers une ouverture (65) réalisée dans le dessus (66) du canal de recyclage (17) et, d'autre part, à un canal d'évacuation (70) à travers un siège de soupape (69), ledit canal d'évacuation (70) débouchant dans la conduite d'évacuation de vapeur (43).

5. Four de boulangerie selon la revendication 4, caractérisé en ce que la chambre d'évacuation (64) comporte une soupape d'évacuation (71) dont la tige de soupape (72) coulissant à travers un presse-étoupe (73) et une douille de guidage (74), coopère avec un des éléments moteurs (85).

6. Four de boulangerie selon la revendication 5, caractérisé en ce que la tige de soupape (72) comporte un ergot (77), sur lequel est fixée une des extrémités (76) d'un élément élastique de rappel (75) dont l'autre extrémité (78) est solidaire de la paroi (79) de la chambre d'évacuation (64), et deux épaulements (81, 82) entre lesquels est interposé un des éléments moteurs (85).

7. Four de boulangerie selon la revendication 1, caractérisé en ce que les moyens d'évacuation de la vapeur (46) comportent un volet d'orientation (67) à rappel élastique (99) pivotant autour d'un axe (68) sous l'action d'un des éléments moteurs (95).

8. Four de boulangerie selon la revendication 7, caractérisé en ce que le volet d'orientation (67) comporte une position de fermeture de l'ouverture (65) de la chambre d'évacuation (64) ou une position de fermeture du canal de recyclage (17) telles que les fermetures ne sont pas absolument étanches.

9. Four de boulangerie selon la revendication 1, caractérisé en ce que les éléments moteurs comportent un levier de commande principal (85) actionnée manuellement et pivotant autour d'un axe d'articulation (84).

10. Four de boulangerie selon la revendication 1, caractérisé en ce que les éléments moteurs comportent un levier de commande principal (85) actionée par l'arbre (84) d'un servo-moteur (83).

11. Four de boulangerie selon la revendications 9 et 10, caractérisé en ce que le levier de commande principal (85) comporte une extrémité (86) coopérant avec des moyens de commande agissant sur le soupape d'admission (54).

12. Four de boulangerie selon la revendication 11, caractérisé en ce que les moyens de commande agissant sur la soupape d'admission (54) sont un câble (89) se déplaçant dans une gaine flexible (90) dont l'extrémité supérieure (88) est reliée à l'extrémité (86) du levier de commande principal (85) et dont l'extrémité inférieure (91) agit sur un levier coudé (61) articulé autour d'un axe (62) et coopérant avec l'éxtrémité libre (58) de la tige de soupape (53) de la soupape d'admission.

13. Four de boulangerie selon la revendication 11, caractérisé en ce que les moyens de commande agissant sur la soupape d'admission (54) sont un servo-moteur individuel.

14. Four de boulangerie selon la revendication 11, caractérisé en ce que les moyens de commandes agissant sur la soupape d'admission (54) sont un ensemble de tringles articulées entre-elles.

15. Four de boulangerie selon la revendication 11, caractérisé en ce que les moyens de commande agissant sur la soupape d'admission (54) sont une gaine flexible hydraulique munie à son extrémité liée au levier de commande principal (85) par un vérin moteur et reliée à la soupape d'admission (54) par un vérin récepteur.

16. Four de boulangerie selon la revendication 12, caractérisé en ce que l'extrémité (88) du câble (89) comporte une surlongueur pour retarder l'ouverure de la soupape d'admission (54) par rapport à l'ouverture de la soupape d'évacuation (71).

17. Four de boulangerie selon les revendications 9 et 10, caractérisé en ce que le levier de commande principal (85) comporte une extrémité (87) coopérant avec des moyens de commande agissant sur le volet d'orientation (67).

18. Four de boulangerie selon la revendication 17, caractérisé en ce que les moyens de commande agissant sur le volet d'orientation (67) sont une bielle (95) dont une des extrémités (94) est liée à l'extrémité (87) du levier de commande principal (85) et dont l'autre extrémité (96) est reliée par l'intermédiaire d'un axe (97) d'un levier (98) solidaire du volet d'orientation (67).

19. Four de boulangerie selon la revendication 18, caractérisé en ce que l'extrémité (94) comporte un trou oblong (93) conférant une course à vide de l'extrémité (87) du levier de commande principal (85) pour une action retardée sur le volet d'orientation par rapport aux actions des soupape d'admission (54) et d'évacuation (71).

20. Four de boulangerie selon la revendication 1, caractérisé en ce qu'il comporte un detecteur de fin de course (103) agissant sur les éléments moteurs (61, 83, 85, 89, 95).

21. Four de boulangerie selon la revendication 1, caractérisé en ce qu'il comporte un temporisateur préréglé commandant la durée de vidage et coopérant avec un mécanisme de verrouillage condamnant l'ouverture de la porte d'enfournement (11).

22. Procédé de vidage de la vapeur d'un four de boulangerie selon la revendication 1, caractérisé en ce que l'on remplace, après la cuisson, à plusieurs reprises, le volume de la chambre de cuisson (6) du four de boulangerie (1) par l'air ambiant pris à l'extérieur du four entre le moment de la fin du temps de cuisson, où ce volume est rempli de vapeur et le déclenchement d'un signal annonçant la fin du vidage et la possibilité d'ouvrir sans danger la porte d'enfournement (11).

**Patantansprüche**

1. Backofen mit indirekter Beheizung und Einschubwagen (31) bestehend aus einer Backkammer (6), die mit einer Beschickungstür (11) versperrt ist und sich zur Kammer voll öffnet, einer Rückführungsleitung (17), die mit einen Turbinengebläse (18) und einer mit abgekühlter Luft aus der Backkammer (6) betriebenen Beheizungseinrichtung (21) versehen ist, einer Sammelleitung (22), die Öffnungen (23) zur Einfürhung von dünnen Strahlen warmer Luft (25, 26, 27) in die Backkammer (6) besitzt, und aus einer Vorrichtung zur Dampferzeugung (24), gekennzeichnet durch eine Vorrichtung (44) zur Schnellentleerung des in der Backkammer (8) eingeschlossenen Dampfes am Ende des Backganges und vor der Öffnung der Beschickungstür (11) durch Erzeugen eines Entleerungsstroms, der verursacht wird einerseits durch einen Aussenluftstrom, der sich über den freigesetzten Mitteln (45) des Aussenluftanschlusses im unteren Teil der Backkammer (6) verfängt, um den dort enthaltenen Dampf auszutauschen, und andererseits durch Abziehen über eine im oberen Teil der Backkammer (8) liegende Ansaugöffnung (20) seitens des Turbinengebläses (18) indem der über die Entleerungsmittel (46), die Mittel des Aussenluftanschlusses (45) und die Entleerungsmittel angesaugte Dampf zunächst angesaugt und dann verdrängt wird, wobei die einen mit den anderen Mitteln zusammenarbeiten und gleichzeitig von den Antriebselementen (61, 83, 85, 89, 95) gesteuert werden.

2. Backofen nach Anspruch 1, dadurch gekennzeichnet, daß die Luftanschlußmittel (45) ein Einlaßventil (54) aufweisen, das mit einem Ventilsitz (55) zusammenarbeitet, der vorzugsweise im unteren Teil der Beschickungskammer ausgebildet ist und dessen über die Führungsbuchsen (52, 52) verschiebbare Ventilstange (53) mit einem der Antriebsmittel (61) zusammenarbeitet, wobei dies als Ganzes in einem Gehäuse (48) untergebracht ist, das mit der Sirnseite (49) der Beschickungstür (11) verbunden ist.

3. Backofen nach Anspruch 1, dadurch gekennzeichnet, daß die Ventilstange (53) einen Ansatz (56) aufweist, der einem zwischen dem Ansatz (56) und einem der Führungsbuchsen (51) liegenden elastischen Rückstellelement (57) als Anhalteeinrichtung dient.

4. Backofen nach Anspruch 1, dadurch gekennzeichnet, daß die Dampfentleerungsmittel (46) eine Entleerungskammer (64) aufweisen, die verbunden ist einerseits über die mit dem oberen Teil (66) der Rückführungsleitung (17) verbundene Öffnung (65) mit der Backkammer (6) und andererseits über einen Ventilsitz (69) mit der Entleerungsleitung (70), die in das Dampfaustrittsrohr (43) mündet.

5. Backofen nach Anspruch 4, dadurch gekennzeichnet, daß die Entleerungskammer (64) ein Auslaßventil (71) aufweist, dessen über eine Stopfbüchse (73) und eine Führungsbuchse verschiebbare Ventilstange (72) mit einem der Antriebselemente (85) zusammenarbeitet.

6. Backofen nach Anspruch 5, dadurch gekennzeichnet, daß die Ventilstange (72) einen Vorsprung (77) auf dem eine der Enden (76) eines elastischen Rückstellelementes (75) verankert ist, dessen andere Ende (78) mit der Wand (79) der Entleerungskammer (64) verbunden ist, und zwei Ansätze (81, 82) aufweist, zwischen denen die Antriebselemente (85) eingesetzt sind.

7. Backofen nach Anspruch 1, dadurch gekennzeichnet, daß die Dampfentleerungsmittel (46) eine elastisch rückstellbare (99) Schwenkklappe (67) aufweisen, die unter Einwirkung eines der Antriebselemente (95) um eine Achse (68) scwhenkbar ist.

8. Backofen nach Anspruch 7, dadurch gekennzeichnet, daß die Schwenkklappe (67) eine Schließstellung der Öffnung (65) der Entleerungskammer (64) oder eine Schließstellung der Rückführungsleitung (17) aufweist, und zwar derart, daß die Verschlüsse nicht absolut undurchlässig sind.

9. Backofen nach Anspruch 1, dadurch gekennzeichnet, daß die Antriebselemente einen Hauptsteuerhebel (85) aufweisen, der von Hand betätigt wird und um eine Drehachse (84) schwenkbar ist.

10. Backofen nach Anspruch 1, dadurch gekennzeichnet, daß die Antriebselemente einen Hauptsteuerhebel (85) aufweisen, der von einer Welle (84) eines Servomotors (83) betätigt wird.

11. Backofen nach den Ansprüchen 9 und 10, dadurch gekennzeichnet, daß der Hauptsteuerhebel (85) ein Ende (86) besitzt, das mit den auf das Einlaßventil (54) wirkenden Steurmitteln zusammenarbeitet.

12. Backofen nach Anspruch 11, dadurch gekennzeichnet, daß die auf des Einlaßventil (54) wirkenden Steuermittel ein Kabel (89) aufweisen, das in einer flexiblen Umhüllung (90) verschiebbar ist, deren oberes Ende (88) am Ende (86) des Hauptsteuerhebels (85) liegt und deren unteres Ende (91) auf einen um eine Achse (62) angelenkten Kniehabel (61) einwirkt und mit dem freien Ende (58) der Ventilstange (53) des Einlaßventils zusammenarbeitet.

13. Backofen nach Anspruch 11, dadurch gekennzeichnet, daß als das Einlaßventil (54) einwirkende Steuermittel ein unabhängiger Servomotor verwendet wird.

14. Backofen nach Anspruch 11, dadurch gekennzeichnet, daß als auf des Einlaßventil (54) einwirkende Steuermittel ein Satz untereinander gelenkiger Gestänge verwendet wird.

15. Backofen nach Anspruch 11, dadurch gekennzeichnet, daß als auf das Einlaßventil (54) einwirkende Steuermittel eine flexible hydraulische Umhüllung verwendet wird, die an ihren mit dem Hauptsteuerhebel (85) verbunden Ende mit einem antriebseitigen Zylinder ausgestattet und über einen empfängerseitigen Zylinder mit dem Einlaßventil (54) verbunden ist.

16. Backofen nach Anspruch 12, dadurch gekennzeichnet, daß das Ende (88) des Kabels (89) eine Überlänge besitzt, um das Öffnen des Einlaßventils (54) gegenüber des Öffnen der Auslaßventils (71) zu verzögern.

17. Backofen nach den Ansprüchen 9 und 10, dadurch gekennzeichnet, daß der Hauptsteuerhebel (85) ein Ende (87) aufweist, das mit den auf die Schwenkklappe (67) einwirkenden Steuermittel zusammenarbeitet.

18. Backofen nach Anspruch 17, dadurch gekennzeichnet, daß die auf die Schwenkklappe (67) wirkende Steuermittel ein Zwischenglied (95) aufweisen, dessen eines Ende (94) mit dem Ende des Hauptsteuerhebels (85) und dessen anderes Ende (96) über eine Welle (97) mit einem an der Schwenkklappe befestigten Hebel (98) verbunden ist.

19. Backofen nach Anspruch 18, dadurch gekennzeichnet, daß das Ende (94) ein Langloch (93) aufweist, wodurch dem Ende (87) des Hauptsteuerhebels (85) ein Leerhub zum verzögernden Einwirken auf die Schwenkklappe gegenbüber den Betätigungen des Einlaß- und Auslaßventils (54 bzw. 71) erteilt wird.

20. Backofen nach Anspruch 1, dadurch gekennzeichnet, daß er einen auf die Antriebselemente (61, 83, 85, 89, 95) wirksamen Endstellen-Detektor aufweist.

21. Backofen nach Anspruch 1, gekennzeichnet durch einen voreingestellten Verzögerer, durch den die Entleerungsdauer gesteuert wird und der mit einem die Öffnung der Beschickungstür (11) steuernden Verschlußmechanismus zusammenarbeitet.

22. Verfahren zur Dampfenleerung eines Backofens nach Anspruch 1, dadurch gekennzeichnet, daß man nach dem Backen wiederholt das Volumen der Backkammer (6) des Backofens (1) zwischen dem Zeitpunkt der beendeten Backzeit durch Umgebungsluft von außerhalb des Ofens austauscht, wobei das Backkammervolumen mit Dampf gefüllt ist und wobei die Auslössung eines Signal das Ende der Entleerung und die Möglichkeit anzeigt, daß die Beschickungstür (11) ohne Gefahr geöffnet werden kann.

## Claims

1. Bakery oven with indirect heating and with a trolley (31) comprising a baking chamber (6), obturated by a charging door (11) which opens to the whole of the chamber, a recycling chamber (17) equipped with a turbine fan (18) and means of heating (21) the cooled air coming from the baking chamber (6), a collector (22) which has openings (23) for the introduction of small streams of warm air (25, 26, 37) into the baking chamber (6) and an appliance for the production of steam (24), characterised in that it comprises a device (44) for the rapid emptying of the steam enclosed in the baking chamber (6), at the end of the baking cycle and before the charging door (11) is opened, by the creation of an evacuation draught which is caused, on the one hand, by a flow of outside air which rushes in through the cleared means (45) for outside air intake in the bottom of the baking chamber (6) to replace the steam contained in the latter, and, on the other hand, by an extraction process through an ear (20) cut in the top of the baking chamber (6), the process being carried out by the turbine fan (18) by aspiration followed by discharge of the steam sucked in through the means of evacuation (46), whereby the means for outside air intake (45) and the means of evacuation (46) cooperate with one another, being controlled simultaneously by motor elements (61, 83, 85, 89, 95).

2. Bakery oven according to claim 1, characterised in that the means of air intake (45) comprise an inlet valve (54) which cooperates with a valve seating (55) constructed, preferably, in the bottom of the charging door (11), and whose valve stem (53), sliding over guide bosses (51, 52), cooperates with one of the motor elements (61), the whole being housed in a casing (48) which forms one piece with the front part (49) of the charging door (11).

3. Bakery oven according to claim 2, characterised in that the valve stem (53) has a shoulder (56) which serves as a stop for an elastic return element (57) inserted between this shoulder (56) and one of the guide bosses (51).

4. Bakery oven according to claim 2, characterised in that the means of steam evacuation (46) comprise an evacuation chamber (64) connected, on the one hand, to the baking chamber (6) via an opening (65) made in the top (66) of the recycling channel (17) and, on the other hand, to an evacuation channel (70) via a valve seating (69), this evacuation channel (70) coming out into the steam evacuation conduit (43).

5. Bakery oven according to claim 4, characterised in that the evacuation chamber (64) comprises an outlet valve (71) whose valve stem (72) slides through a packing-box (73) and a guide box (74) and cooperates with one of the motor elements (85).

6. Bakery oven according to claim 5, characterised in that the valve stem (72) comprises a stop (77), on which is fixed one of the ends (76) of an elastic return element (75) of which the other end (78) forms one piece with the wall (79) of the evacuation chamber (64), and two shoulders (81, 82), between which one of the motor elements (85) is arranged.

7. Bakery oven according to claim 1, characterised in that the means of steam evacuation (46) comprise a deflection louvre (67) with an elastic return (99), the deflection louvre pivoting around an axis (68) under the action of one of the motor elements (95).

8. Bakery oven according to claim 7, characterised in that the deflection louvre (67) may be positioned as a closure for the opening (65) of the evacuation chamber (64) or as a closure for the recycling channel (17) such that the closures are not absolutely tight.

9. Bakery oven according to claim 1, characterised in that the motor elements comprise a main control lever (85) which is actuated manually and pivots around an articulation axis (84).

10. Bakery oven according to claim 1, characterised by the fact that the motor elements comprise a main control lever (85) actuated by the shaft (84) of a servomotor (83).

11. Bakery oven according to claims 9 and 10, characterised in that one end (86) of the main control lever (85) cooperates with controls acting on the inlet valve (54).

12. Bakery oven according to claim 11, characterised in that the controls acting on the inlet valve (54) consist of a cable (89) which moves in a flexible sheath (90) whose upper end (88) is connected to the end (86) of the main control lever (85) and whose lower end (91) acts on a bent lever (61) articulated around an axis (62) and cooperates with the free end (58) of the valve stem (53) of the inlet valve.

13. Bakery oven according to claim 11, characterised in that the controls acting on the inlet valve (54) consist of an individual servomotor.

14. Bakery oven according to claim 11, characterised in that the controls acting on the inlet valve (54) consist of a set of rods articulated with one another.

15. Bakery oven according to claim 11, characterised in that the controls acting on the inlet valve (54) consist of a flexible hydraulic sheath which, at its end connected to the main control lever (85), is equipped with a motor jack and connected to the inlet valve (54) by a receptor jack.

16. Bakery oven according to claim 12, characterised in that the end (88) of the cable (89) comprises an overlength for delaying the opening of the inlet valve (54) in relation to the opening of the outlet valve (71).

17. Bakery oven according to claims 9 and 10, characterised in that the main control lever (85) has an end (87) which cooperates with the controls acting on the deflector louvre (67).

18. Bakery oven according to claim 17, characterised in that the controls acting on the deflector louvres (67) consist of a crank (95), one of whose ends (94) is connected to the end (87) of the main control lever (85), the other end (96) being connected via an axis (97) to a lever (98) which forms one piece with the deflector louvre (67).

19. Bakery oven according to claim 18, characterised in that the end (94) has an oblong hole (93) which imparts an idle stroke to the end (87) of the main control lever (85) to cause a delayed action on the deflector louvre in relation to the actions of the inlet (54) and outlet (71) valves.

20. Bakery oven according to claim 1, characterised in that it comprises an end of travel detector (103) acting on the motor elements (61, 83, 85, 89, 95).

21. Bakery oven according to claim 1, characterised in that it comprises a pre-set timer which controls the emptying time and cooperates with a locking mechanism preventing the charging door (11) from being opened.

22. Process for emptying the steam from a bakery oven according to claim 1, characterised in that after baking, the volume of the baking chamber (6) of the baker oven (1) is replaced several times by ambient air taken from outside the oven between the moment when baking finishes, when this volume is filled with stem, and the triggering of a signal which announces the end of the emptying process and the possibility of opening the oven door (11) without danger.

# FIG.1